# EUROPEAN PATENT APPLICATION

(11) **EP 3 120 921 A1**
(43) Date of publication of application: **25.01.2017**
(21) Application number: 15764842.9
(22) Date of filing: 13.03.2015
(51) Int. Cl.: B01D 71/70, B01D 69/10, B01D 69/12, B01D 71/02, C01B 33/12

(54) **SEPARATION MEMBRANE FOR TREATING ACIDIC GAS-CONTAINING GAS, AND METHOD FOR MANUFACTURING SEPARATION MEMBRANE FOR TREATING ACIDIC GAS-CONTAINING GAS**

(30) Priority: 18.03.2014 JP 2014054261
(71) Applicant: Toyo Tire & Rubber Co., Ltd., Osaka-shi, Osaka 550-8661 (JP)
(72) Inventor: KURAHASHI Tomohiko, Osaka-shi Osaka 550-8661 (JP); KURAOKA Koji, Kobe-shi Hyogo 657-8501 (JP)
(74) Representative: Hart-Davis, Jason
(86) International application number: PCT/JP2015/057459
(87) International publication number: WO 2015/141576

(57) **Abstract**

Provided is an acidic gas-containing gas treatment separation membrane (5) in which an intermediate layer provided on a support member is optimized, and which can treat and separate a gas mixture containing acidic gas and methane gas and/or nitrogen gas into the gas components, and thereby efficiently obtain acidic gas or methane gas and/or nitrogen gas. The acidic gas-containing gas treatment separation membrane (5) includes an inorganic porous support member, an intermediate layer containing a polysiloxane network structure material and formed on a surface of the inorganic porous support member, and a separation layer containing a hydrocarbon group-containing polysiloxane network structure material and formed on the intermediate layer.

## Description

### TECHNICAL FIELD

The present invention relates to an acidic gas-containing gas treatment separation membrane for separating a gas mixture containing acidic gas and other gas into the gas components, and a method for manufacturing the separation membrane.

### BACKGROUND ART

As an energy resource alternative to petroleum, the use of methane gas has traditionally been studied. Methane gas is mostly available as natural gas. In recent years, as sources of methane gas, methane hydrate occurring on the ocean floor, biogas occurring during biological treatment of garbage or the like, off-gas which is a byproduct of oil refinery, and the like have been studied. However, these methane gas sources may contain acidic gas (carbon dioxide, hydrogen sulfide, etc.) in addition to methane gas. Therefore, in order to use a gas mixture containing acidic gas and methane gas as a material for town gas or a material for hydrogen for use in a fuel cell, it is necessary to separate only methane gas from the gas mixture or increase the methane gas concentration of the gas mixture.

Also, gas emitted from a factory or power station contains nitrogen gas and acidic gas. If the gas mixture of nitrogen gas and acidic gas can be separated into the gas components by an appropriate treatment, the utility of the gas is increased. For example, if carbon dioxide, which is acidic gas, can be efficiently recovered from gas emitted from a factory, commercially viable liquefied carbon dioxide can be produced from the recovered carbon dioxide.

In the background art, as a technique of separating methane gas from a gas mixture containing carbon dioxide and methane gas, there has been a methane concentration device which includes two separation membrane stages, and applies the gas mixture to each stage to remove gas other than methane gas from the gas mixture in a stepwise fashion to concentrate methane gas (see, for example, Patent Document 1). The methane concentration device of Patent Document 1 separates a gas A having a smaller molecular size than that of methane gas from a gas mixture. As a separation membrane, an inorganic porous membrane is employed which has a permeability coefficient ratio "A/methane" of the gas A to methane of 5 or more and a permeability of 1 x 10⁻⁹ or more (mol-m⁻²-s⁻¹-Pa⁻¹) with respect to the gas A. The use of such a separation membrane allows for recovery of a gas having a high methane concentration at a high recovery rate.

A gas having a high methane concentration may be obtained from a gas mixture containing carbon dioxide and methane gas as follows. If carbon dioxide is separated from the gas mixture, the concentration of methane gas in the gas mixture relatively increases, so that a gas having a high methane concentration is obtained. Carbon dioxide may be separated from a gas mixture using a gas separation filter which includes a separation membrane formed from an amorphous oxide having a plurality of pores formed by a cyclic siloxane linkage, where a basic functional group containing nitrogen (N) and silicon (Si) is bonded to a side chain of Si (see, for example, Patent Document 2). The gas separation filter of Patent Document 2 allows acidic gas, such as carbon dioxide or the like, to efficiently pass through the narrow pores, and therefore, has high separation performance.

### CITATION LIST

### PATENT LITERATURE

Patent Document 1: Japanese Unexamined Patent Application Publication No. 2008-260739
Patent Document 2: Japanese Unexamined Patent Application Publication No. 2000-279773

### SUMMARY OF INVENTION

### TECHNICAL PROBLEM

In order to separate a gas mixture into carbon dioxide and other gases (methane gas, nitrogen gas) using a separation membrane, the separation membrane needs to be capable of efficiently passing carbon dioxide contained in the gas mixture. In this regard, the methane concentration device of Patent Document 1 employs a separation membrane which separates a gas A having a smaller molecular size than that of methane gas, and the gas A includes carbon dioxide. Patent Document 1 describes an example separation membrane which has a permeability coefficient ratio "CO₂/CH₄" of carbon dioxide to methane of 3.3-20. However, such a low permeability coefficient ratio causes a large loss of methane gas. Therefore, as in Patent Document 1, it is necessary to provide a complicated device configuration which includes two separation membrane stages, recirculates a gas which has previously failed to pass, and the like. Otherwise, it would be difficult to sufficiently concentrate methane gas to a practical level.

In the case of the gas separation filter of Patent Document 2, an attempt is made to increase carbon dioxide separation performance by introducing a basic functional group containing nitrogen (N) and silicon (Si) into a surface of a separation membrane. In order to provide sufficient carbon dioxide separation performance, it is important to form a uniform membrane while introducing a sufficient number of functional groups into a surface of the separation membrane. However, in the separation membrane of Patent Document 2, the number of functional groups which can be introduced is determined based on the molecular structure (the number of reaction sites) of a material for the separation membrane. Therefore, there is a limit for improving carbon dioxide separation performance only by modifying the separation membrane itself. Also, as the number of functional groups introduced into the separation membrane increases, steric hindrance more easily occurs in the molecular structure, which is likely to adversely influence the formation of a uniform membrane.

The separation membranes used in Patent Document 1 and Patent Document 2 are produced by applying a liquid (sol) separation membrane formation material to a support member and then subjecting the resultant structure to a thermal treatment. Here, in order to improve the formation of the separation membrane on the support member, an intermediate layer is previously provided on the support member. In this case, as to the intermediate layer, it is important to appropriately select the intermediate layer formation material or the weight per unit area of the intermediate layer formation material applied to the support member, carefully taking into consideration the relationship between the intermediate layer, and the constituent materials for the separation membrane, and the support membrane. However, in Patent Document 1 and Patent Document 2, the technical idea of selecting the intermediate layer formation material on the basis of the constituent materials for the separation membrane is not provided, and the weight per unit area of the intermediate layer formation material applied to the support member is not taught or suggested.

With the above problems in mind, the present invention has been made. It is an object of the present invention to provide an acidic gas-containing gas treatment separation membrane capable of treating and separating a gas mixture containing acidic gas and methane gas and/or nitrogen gas into the gas components, and thereby efficiently obtaining acidic gas, or methane gas and/or nitrogen gas, where an intermediate layer formed on a support member is optimized, and a method for manufacturing the acidic gas-containing gas treatment separation membrane.

### SOLUTION TO PROBLEM

To achieve the object, an acidic gas-containing gas treatment separation membrane includes:
an inorganic porous support member;
an intermediate layer containing a polysiloxane network structure material and formed on a surface of the inorganic porous support member; and
a separation layer containing a hydrocarbon group-containing polysiloxane network structure material and formed on the intermediate layer.

According to the acidic gas-containing gas treatment separation membrane thus configured, the polysiloxane network structure material contained in the intermediate layer, and the hydrocarbon group-containing polysiloxane network structure material contained in the separation layer, belong to the same material category and have similar molecular structures. Therefore, the polysiloxane network structure material and the hydrocarbon group-containing polysiloxane network structure material have high affinity for each other. Therefore, when the intermediate layer is formed on the inorganic porous support member, and the separation layer is formed on the intermediate layer, interface debonding, cracking, or the like does not occur between the intermediate layer and the separation layer, and the intermediate layer and the separation layer are firmly attached together, so that a stable acidic gas-containing gas treatment separation membrane can be formed. When a gas mixture containing acidic gas and methane gas and/or nitrogen gas is applied to the acidic gas-containing gas treatment separation membrane, the acidic gas in the gas mixture is selectively attracted by the surface of the hydrocarbon group-containing polysiloxane network structure material, so that the acidic gas directly passes through the separation membrane. As a result, the methane gas component and/or the nitrogen gas component of the gas mixture are concentrated, and therefore, a gas having a high methane concentration and/or nitrogen concentration can be efficiently obtained. In addition, the acidic gas which has passed through the separation membrane has an increased purity and therefore is highly useful.

In the acidic gas-containing gas treatment separation membrane of the present invention,
the polysiloxane network structure material is preferably a single structure material obtained by a sol-gel reaction of a tetraalkoxysilane, and
the hydrocarbon group-containing polysiloxane network structure material is preferably a composite structure material obtained by a sol-gel reaction of a tetraalkoxysilane and a hydrocarbon group-containing trialkoxysilane.

According to the acidic gas-containing gas treatment separation membrane thus configured, the polysiloxane network structure material contained in the intermediate layer is made from a tetraalkoxysilane, and is a single structure material obtained by a sol-gel reaction. The single structure material has a stable structure derived from the tetraalkoxysilane, and therefore, can stabilize the inorganic porous support member. This can prevent or reduce excessive permeation into the inorganic porous support member of a separation layer formation material (sol) applied to the surface of the inorganic porous support member when the separation layer is formed. In addition, the hydrocarbon group-containing polysiloxane network structure material contained in the separation layer is made from a tetraalkoxysilane and a hydrocarbon group-containing trialkoxysilane, and is a composite structure material obtained by a sol-gel reaction thereof. The composite structure material has both a stable structure derived from the tetraalkoxysilane and high acidic gas affinity derived from the hydrocarbon group-containing trialkoxysilane. Therefore, when a gas mixture containing acidic gas and methane gas and/or nitrogen gas is applied to the composite structure material, the acidic gas is selectively attracted, so that the acidic gas directly passes through the separation membrane. As a result, the methane gas component and/or the nitrogen gas component of the gas mixture are concentrated, and therefore, a gas having a high methane concentration and/or nitrogen concentration can be efficiently obtained. In addition, the acidic gas which has passed through the separation membrane has an increased purity and therefore is highly useful.

In the acidic gas-containing gas treatment separation membrane of the present invention,
the tetraalkoxysilane is preferably tetramethoxysilane or tetraethoxysilane, and
the hydrocarbon group-containing trialkoxysilane is preferably a trimethoxysilane or a triethoxysilane, the Si atom of the trimethoxysilane or triethoxysilane being bonded to an alkyl group having 1-6 carbon atoms or a phenyl group.

According to the acidic gas-containing gas treatment separation membrane thus configured, the above preferable combination of a tetraalkoxysilane and a hydrocarbon group-containing trialkoxysilane is selected, and therefore, a single structure material having a stable structure, and a composite structure material having both a stable structure and high acidic gas affinity, can be efficiently obtained. The acidic gas-containing gas treatment separation membrane containing the single structure material and the composite structure material can have good performance of separation of acidic gas or methane gas and/or nitrogen gas, and have high reliability.

In the acidic gas-containing gas treatment separation membrane of the present invention,
at least one of the intermediate layer and the separation layer is preferably doped with a metal salt having affinity for acidic gas.

According to the acidic gas-containing gas treatment separation membrane thus configured, at least one of the intermediate layer and the separation layer is doped with a metal salt having affinity for acidic gas, whereby the acidic gas affinity of the separation membrane can be synergistically increased.

In the acidic gas-containing gas treatment separation membrane of the present invention,
the metal salt is preferably an acetate, nitrate, carbonate, borate, or phosphate of at least one metal selected from the group consisting of Li, Na, K, Cs, Mg, Ca, Ni, Fe, and Al.

According to the acidic gas-containing gas treatment separation membrane thus configured, the above preferable metal salt is selected as the metal salt having affinity for acidic gas. Therefore, when a gas mixture containing acidic gas and methane gas and/or nitrogen gas is applied to the separation membrane, the acidic gas in the gas mixture is reliably attracted, and is selectively passed through the separation membrane. As a result, the methane gas component and/or the nitrogen gas component of the gas mixture are concentrated, whereby a gas having a high methane concentration or nitrogen concentration can be obtained. In addition, the acidic gas which has passed through the separation membrane has an increased purity and therefore is highly useful.

In the acidic gas-containing gas treatment separation membrane of the present invention,
the intermediate layer preferably has a weight per unit area of 0.1-5.0 mg/cm², and
the separation layer preferably has a weight per unit area of 0.1-3.0 mg/cm².

According to the acidic gas-containing gas treatment separation membrane thus configured, the weights per unit area of the intermediate layer and the separation layer are set within the above appropriate ranges. Therefore, both good stabilization of the separation membrane by the intermediate layer and good performance of separation of acidic gas or methane gas and/or nitrogen gas by the separation layer can be simultaneously achieved.

In the acidic gas-containing gas treatment separation membrane of the present invention,
the inorganic porous support member preferably has pores of 4-200 nm.

According to the acidic gas-containing gas treatment separation membrane thus configured, the inorganic porous support member has pores having the above appropriate size. Therefore, the separation membrane in which the stable intermediate layer can be easily formed, and the separation performance of the separation layer is not impaired, can be configured.

In the acidic gas-containing gas treatment separation membrane of the present invention,
a distance in a depth direction from a surface of the inorganic porous support member, by which the tetraalkoxysilane or the hydrocarbon group-containing trialkoxysilane permeates the inorganic porous support member, is preferably 50 µm or less.

According to the acidic gas-containing gas treatment separation membrane thus configured, the amount of the tetraalkoxysilane or the hydrocarbon group-containing trialkoxysilane which permeates the inorganic porous support member is limited, the pores of the inorganic porous support member are not excessively blocked. Therefore, when a gas mixture containing acidic gas and methane gas and/or nitrogen gas is applied to the separation membrane, the amount of the gas passing therethrough (the amount of the gas mixture treated) can be maintained. In addition, the amounts of intermediate layer and separation layer formation materials (sol) applied to the inorganic porous support member can be reduced, which contributes to a reduction in manufacturing cost of the separation membrane.

To achieve the object, a method for manufacturing an acidic gas-containing gas treatment separation membrane according to the present invention, including:
(a) a preparation step of formulating a first mixture solution of a tetraalkoxysilane, an acid catalyst, water, and an organic solvent, and a second mixture solution of a tetraalkoxysilane, a hydrocarbon group-containing trialkoxysilane, an acid catalyst, water, and an organic solvent;
(b) a first application step of applying the first mixture solution to a surface of an inorganic porous support member;
(c) an intermediate layer formation step of performing a thermal treatment on the inorganic porous support member after the first application step, to form an intermediate layer containing a polysiloxane network structure material on the surface of the inorganic porous support member;
(d) a second application step of applying the second mixture solution onto the intermediate layer; and
(e) a separation layer formation step of performing a thermal treatment on the inorganic porous support member after the second application step, to form a separation layer containing a hydrocarbon group-containing polysiloxane network structure material on the intermediate layer.

According to the acidic gas-containing gas treatment separation membrane manufacturing method thus configured, the polysiloxane network structure material contained in the intermediate layer, and the hydrocarbon group-containing polysiloxane network structure material contained in the separation layer, have high affinity for each other. When the intermediate layer is formed on the surface of the inorganic porous support member by the first application step and the intermediate layer formation step, and the separation layer is formed on the intermediate layer by the second application step and the separation layer formation step, interface debonding, cracking, or the like does not occur between the intermediate layer and the separation layer, and the intermediate layer and the separation layer are firmly attached together, so that a stable acidic gas-containing gas treatment separation membrane can be formed. When a gas mixture containing acidic gas and methane gas and/or nitrogen gas is applied to the acidic gas-containing gas treatment separation membrane, the acidic gas in the gas mixture is selectively attracted by the surface of the hydrocarbon group-containing polysiloxane network structure material, so that the acidic gas directly passes through the separation membrane. As a result, the methane gas component and/or the nitrogen gas component of the gas mixture are concentrated, and therefore, a gas having a high methane concentration and/or nitrogen concentration can be efficiently obtained. In addition, the acidic gas which has passed through the separation membrane has an increased purity and therefore is highly useful.

In the acidic gas-containing gas treatment separation membrane manufacture method of the present invention,
a set of the first application step and the intermediate layer formation step is preferably performed a plurality of times.

According to the acidic gas-containing gas treatment separation membrane manufacturing method thus configured, a set of the first application step and the intermediate layer formation step is performed a plurality of times, whereby a more robust and stable intermediate layer can be formed.

In the acidic gas-containing gas treatment separation membrane manufacture method of the present invention,
a set of the second application step and the separation layer formation step is preferably performed a plurality of times.

According to the acidic gas-containing gas treatment separation membrane manufacturing method thus configured, a set of the second application step and the separation layer formation step is performed a plurality of times, whereby a more robust separation layer having higher separation performance can be formed.

### BRIEF DESCRIPTION OF DRAWINGS

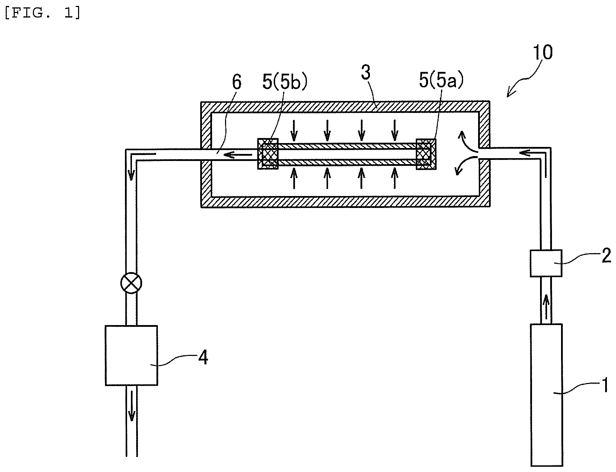

[FIG. 1] FIG. 1 is a schematic diagram showing a configuration of a gas permeation rate measurement device which was used in a separation performance verification test.

### DESCRIPTION OF EMBODIMENTS

Embodiments of an acidic gas-containing gas treatment separation membrane according to the present invention, and a method for manufacturing the acidic gas-containing gas treatment separation membrane, will now be described. Note that the present invention is not intended to be limited to configurations described below.

### <Acidic Gas-Containing Gas Treatment Separation Membrane>

An acidic gas-containing gas treatment separation membrane according to the present invention is used to treat a gas mixture containing acidic gas and methane gas and/or nitrogen gas (such a gas mixture is hereinafter also referred to as "acidic gas-containing gas"). In this embodiment, a gas mixture containing acidic gas and methane gas is used as an illustrative example. As used herein, acidic gas refers to gas which is acidic when it is dissolved in water, including carbon dioxide, hydrogen sulfide, and the like, for example. In this embodiment, particularly, acidic gas is assumed to be carbon dioxide in the description that follows. Therefore, while the acidic gas-containing gas treatment separation membrane of the present invention is described as a carbon dioxide separation membrane for separating carbon dioxide, the acidic gas-containing gas treatment separation membrane of the present invention may be a methane gas separation membrane for separating methane gas, a nitrogen gas separation membrane for separating nitrogen gas, or a carbon dioxide/(methane gas and/or nitrogen gas) separation membrane for simultaneously separating carbon dioxide and methane gas and/or nitrogen gas. The acidic gas-containing gas treatment separation membrane may hereinafter be simply referred to as the "separation membrane."

The acidic gas-containing gas treatment separation membrane is configured by forming an intermediate layer on an inorganic porous support member as a base, and then forming a separation layer on the intermediate layer. The inorganic porous support member, the intermediate layer, and the separation layer will now be described in detail.

### (Inorganic Porous Support Member)

The inorganic porous support member includes a material such as, for example, a silica-based ceramic, silica-based glass, an alumina-based ceramic, stainless steel, titanium, silver, or the like. The inorganic porous support member is provided with an inlet portion through which gas flows in and an outlet portion through which gas flows out. For example, the gas inlet portion is an opening provided in the inorganic porous support member, and the gas outlet portion is an external surface of the inorganic porous support member. Alternatively, the external surface of the inorganic porous support member can serve as the gas inlet portion, and the opening provided in the inorganic porous support member can serve as the gas outlet portion. The external surface has a large number of pores, and therefore, allows gas to flow through the entire external surface. The inorganic porous support member may have, for example, a cylindrical structure, circular pipe structure, tubular structure, spiral structure, or the like in which a gas flow path is provided, or a monolith structure in which a complicated or tangled continuous path is provided, or the like. The inorganic porous support member may also be formed by preparing a solid plate object or bulk object formed from an inorganic porous material and then hollowing out a portion of the object to form a gas flow path. The inorganic porous support member preferably has a pore diameter of 4-200 µm.

### (Intermediate layer)

The intermediate layer is provided to stabilize a surface of the inorganic porous support member so that a separation layer described below can be easily formed. For example, when a mixture solution (sol) containing a material for formation of a separation layer described below is directly applied to a surface of the inorganic porous support member which has a relatively large pore size, the mixture solution excessively permeates the pore without remaining on the surface, and therefore, it is difficult to form the separation layer. Therefore, if an intermediate layer is provided on the surface of the inorganic porous support member, the entrance of the pore is narrowed by the intermediate layer, which makes it easier to apply the mixture solution. In addition, the intermediate layer levels out the surface of the inorganic porous support member, which can prevent or reduce peeling and cracking of the separation layer.

The intermediate layer contains a silane compound. The intermediate layer of this embodiment has a polysiloxane network structure material. The polysiloxane network structure material is obtained by a sol-gel reaction of a tetraalkoxysilane.

The tetraalkoxysilane is a tetrafunctional alkoxysilane represented by the following formula (1). 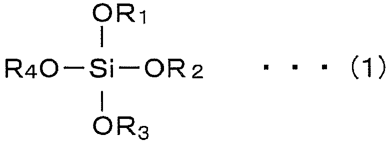 where R₁ to R₄ represent the same or different alkyl groups having 1 or 2 carbon atoms.

The tetraalkoxysilane is preferably tetramethoxysilane (TMOS), in which R₁ to R₄ are all a methyl group in formula (1), or tetraethoxysilane (TEOS), in which R₁ to R₄ are all an ethyl group in formula (1).

When the tetrafunctional alkoxysilane of formula (1) is subjected to a sol-gel reaction, a polysiloxane network structure material is obtained in which siloxane linkages (Si-O bonds) are linked together in a three-dimensional fashion. The polysiloxane network structure material is hereinafter referred to as the "single structure material" in order to distinguish it from a composite polysiloxane network structure material described below.

The single structure material forms an inorganic porous material having an indefinite shape that has a dense polysiloxane network structure. The single structure material is preferably doped with a metal salt having affinity for carbon dioxide. Examples of such a metal salt include an acetate, nitrate, carbonate, borate, or phosphate of at least one metal selected from the group consisting of Li, Na, K, Cs, Mg, Ca, Ni, Fe, and Al. Of them, magnesium acetate or magnesium nitrate is preferable. The above metal salts such as magnesium acetate and the like have good affinity for carbon dioxide, and therefore, are effective in improving the efficiency of separation of carbon dioxide. The single structure material may be doped with the metal salt by, for example, immersing the single structure material in an aqueous solution containing the metal salt so that the single structure material is impregnated with the metal salt alone or in combination with other materials (this technique is called an impregnation technique). Alternatively, the metal salt may be previously added to a material for the single structure material.

### (Separation layer)

The separation layer has the function of selectively attracting and separating carbon dioxide from a gas mixture containing carbon dioxide and methane gas. The separation layer includes a hydrocarbon group-containing polysiloxane network structure material. The hydrocarbon group-containing polysiloxane network structure material is obtained by a sol-gel reaction of a tetraalkoxysilane and a hydrocarbon group-containing trialkoxysilane.

The tetraalkoxysilane can be similar to the tetrafunctional alkoxysilane represented by formula (1) which is used in formation of the intermediate layer. As in the intermediate layer, the tetraalkoxysilane is preferably tetramethoxysilane (TMOS), in which R₁ to R₄ are all a methyl group in formula (1), or tetraethoxysilane (TEOS), in which R₁ to R₄ are all an ethyl group in formula (1).

The hydrocarbon group-containing trialkoxysilane is a trifunctional alkoxysilane represented by the following formula (2). 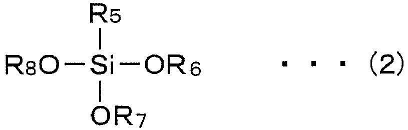 where R₅ represents an alkyl group having 1-6 carbon atoms or a phenyl group, and R₆ to R₈ represent the same or different alkyl groups having 1 or 2 carbon atoms.

The hydrocarbon group-containing trialkoxysilane is preferably a trimethoxysilane (R₆ to R₈ are all a methyl group) in which an alkyl group having 1-6 carbon atoms or a phenyl group is bonded to the Si atom in formula (2), or a triethoxysilane (R₆ to R₈ are all an ethyl group) in which an alkyl group having 1-6 carbon atoms or a phenyl group is bonded to the Si atom in formula (2). Examples of the preferable hydrocarbon group-containing trialkoxysilane include methyltrimethoxysilane, methyltriethoxysilane, ethyltrimethoxysilane, ethyltriethoxysilane, propyltrimethoxysilane, propyltriethoxysilane, butyltrimethoxysilane, butyltriethoxysilane, pentyltrimethoxysilane, pentyltriethoxysilane, hexyltrimethoxysilane, hexyltriethoxysilane, phenyltrimethoxysilane, and phenyltriethoxysilane.

If the tetrafunctional alkoxysilane of formula (1) and the trifunctional alkoxysilane of formula (2) are caused to undergo a sol-gel reaction, a composite polysiloxane network structure material represented by the following formula (3) is obtained, for example. The composite polysiloxane network structure material is hereinafter referred to as the "composite structure material." 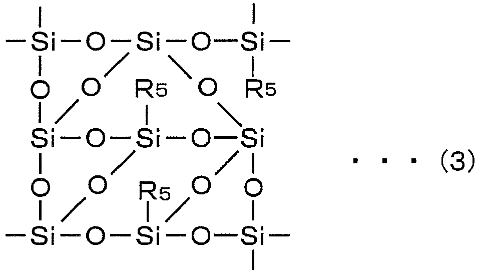 where R₅ represents an alkyl group having 1-6 carbon atoms or a phenyl group.

In the composite structure material of formula (3), a hydrocarbon group R₅ is present in the polysiloxane network structure, which forms a kind of organic-inorganic complex.

Here, the different groups R₅ impart different properties to the trifunctional alkoxysilane of formula (2). For example, methyltrimethoxysilane or methyltriethoxysilane (a hydrocarbon group having one carbon atom) mainly has affinity for carbon dioxide, and a trimethoxysilane or triethoxysilane whose Si atom is bonded to an alkyl group having 2-6 carbon atoms or a phenyl group (hydrocarbon groups having 2-6 carbon atoms) mainly has affinity for methane gas. In addition, when the tetrafunctional alkoxysilane of formula (1) and the trifunctional alkoxysilane of formula (2) are caused to react with each other to synthesize the composite structure material of formula (3), then if the mixing ratio of the tetrafunctional alkoxysilane (indicated by "A") to the trifunctional alkoxysilane (indicated by "B") is optimized, a separation membrane having good carbon dioxide separation performance or methane gas separation performance can be formed. Such a suitable mixing ratio A/B, which is expressed in a molar ratio, is 1/9-9/1, preferably 3/7-7/3, and more preferably 4/6-6/4. With such a mixing ratio, a composite structure material which has both stable structure and high carbon dioxide affinity can be efficiently obtained.

In order to increase selectivity with respect to carbon dioxide or methane gas, it is effective to adjust the composition of the trifunctional alkoxysilane (B) of formula (2), which is one of the materials. For example, the amount of methyltrimethoxysilane or methyltriethoxysilane contained in the trifunctional alkoxysilane may be increased in order to increase the selectivity (affinity) with respect to carbon dioxide. The amount of a trimethoxysilane or triethoxysilane whose Si atom is bonded to an alkyl group having 2-6 carbon atoms or a phenyl group, that is contained in the trifunctional alkoxysilane, may be increased in order to increase the selectivity (affinity) with respect to methane gas. Specifically, while the mixing ratio (A/B) of the tetrafunctional alkoxysilane (A) to the trifunctional alkoxysilane (B) is set to fall within the above suitable range, the mixing ratio (B1/B2) of methyltrimethoxysilane or methyltriethoxysilane (indicated by "B1") to a trimethoxysilane or triethoxysilane whose Si atom is bonded to an alkyl group having 2-6 carbon atoms or a phenyl group (indicated by "B2"), of the trifunctional alkoxysilane (B), is optimized. The suitable mixing ratio B1/B2 in the trifunctional alkoxysilane (B), which is expressed in a molar ratio, is 1/9-9/1, preferably 3/7-7/3, and more preferably 4/6-6/4.

In order to further increase the carbon dioxide or methane gas separation performance, a metal salt having affinity for carbon dioxide is preferably added to the composite structure material of formula (3), i.e., the composite structure material of formula (3) is preferably doped with such a metal salt, as in the intermediate layer. The metal salt may be selected from those with which the intermediate layer can be doped. Of those metal salts, magnesium acetate or magnesium nitrate is preferable. The metal salts including magnesium acetate and the like have good affinity for carbon dioxide, and therefore, can highly efficiently separate carbon dioxide due to a synergistic effect with the hydrocarbon group R₅ (particularly, when R₅ is a methyl group) included in the polysiloxane network structure. The composite structure material can be doped with the metal salt in a manner similar to that in which the intermediate layer is doped with a metal salt.

### <Method for Producing Acidic Gas-Containing Gas Treatment Separation Membrane>

The acidic gas-containing gas treatment separation membrane of the present invention is produced by performing the following steps (a)-(e). The steps will now be described in detail.

### (a) Preparation Step

A preparation step includes formulating a first mixture solution which is a mixture of a tetraalkoxysilane, an acid catalyst, water, and an organic solvent. The first mixture solution is used in a "first application step" following the preparation step. The amounts of the tetraalkoxysilane, acid catalyst, water, and organic solvent in the mixture are preferably adjusted so that the amount of the acid catalyst is 0.005-0.1 mol, the amount of the water is 0.5-10 mol, and the amount of the organic solvent is 5-60 mol with respect to a total of 1 mol of the tetraalkoxysilane. If the amount of the acid catalyst in the mixture is less than 0.005 mol, the hydrolysis rate is low, and therefore, it takes a long time to produce the separation membrane. If the amount of the acid catalyst in the mixture is more than 0.1 mol, the hydrolysis rate is excessively high, and therefore, it is difficult to obtain the separation membrane which is uniform. If the amount of water in the mixture is less than 0.5 mol, the hydrolysis rate is low, and therefore, a sol-gel reaction described below does not sufficiently proceed. If the amount of water in the mixture is more than 10 mol, the hydrolysis rate is excessively high, and therefore, the pore diameter increases, so that it is difficult to obtain the separation membrane which is dense. If the amount of the organic solvent in the mixture is less than 5 mol, the concentration of the first mixture solution is high, and therefore, it is difficult to obtain the separation membrane which is dense and uniform. If the amount of the organic solvent in the mixture is more than 60 mol, the concentration of the first mixture solution is low, and therefore, the number of times of coating with the mixture solution (the number of steps) increases, resulting in a reduction in production efficiency. Examples of the acid catalyst include nitric acid, hydrochloric acid, sulfuric acid, and the like. Of them, nitric acid or hydrochloric acid is preferable. Examples of the organic solvent include methanol, ethanol, propanol, butanol, benzene, toluene, and the like. Of them, methanol or ethanol is preferable. When the first mixture solution is formulated, a metal salt having affinity for carbon dioxide may be added to the solution. The amount of the metal salt added to the mixture is adjusted to 0.01-0.3 mol under the above mixture conditions. As the metal salt having affinity for carbon dioxide, those described above in the section "Acidic Gas-Containing Gas Treatment Separation Membrane" may be used.

In the first mixture solution, a sol-gel reaction begins in which the tetraalkoxysilane repeatedly undergoes hydrolysis and polycondensation. The tetraalkoxysilane may be those described above in the section "Acidic Gas-Containing Gas Treatment Separation Membrane." For example, if tetraethoxysilane (TEOS) is used as an example of the tetraalkoxysilane, the sol-gel reaction may proceed according to the following scheme (scheme 1). Note that scheme 1 is a model of the process of the sol-gel reaction, and may not necessarily exactly correspond to the actual molecular structure.

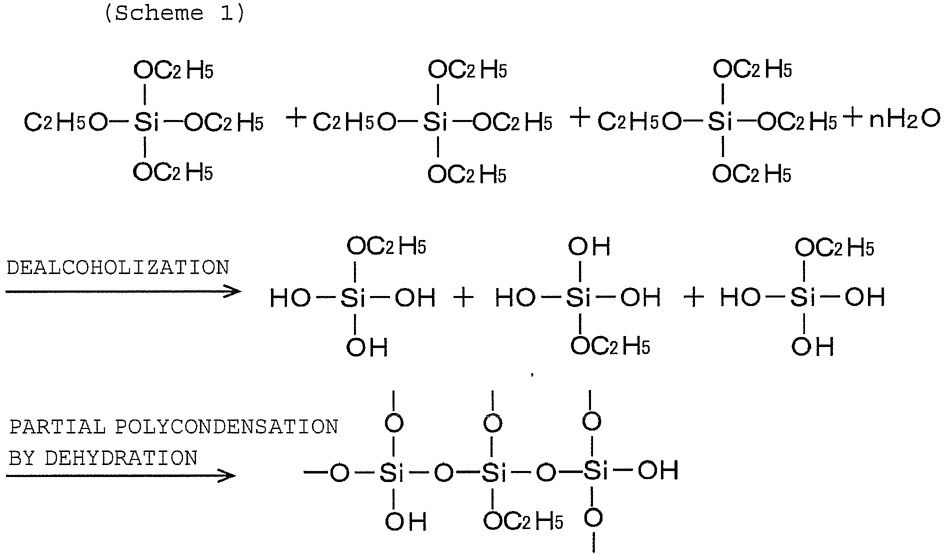

According to scheme 1, a portion of the ethoxy groups of tetraethoxysilane is initially hydrolyzed and dealcoholized to produce silanol groups. A portion of the ethoxy groups of tetraethoxysilane may not be hydrolyzed, and may remain unchanged. Next, a portion of the silanol groups is associated with neighboring silanol groups to undergo polycondensation due to dehydration. As a result, a siloxane backbone with remaining silanol or ethoxy groups is formed. The above hydrolysis reaction and dehydration polycondensation reaction substantially uniformly proceed in the mixture solution system, and therefore, silanol or ethoxy groups are substantially uniformly distributed in the siloxane backbone. When a metal salt is added, the metal salt incorporated in the polysiloxane during the sol-gel reaction may be substantially uniformly distributed in the polysiloxane. In this stage, the molecular weight of the siloxane is not significantly large, i.e., the siloxane is an oligomer rather than a polymer. Therefore, the silanol group-containing or ethoxy group-containing siloxane oligomer is dissolved in the first mixture solution containing an organic solvent. After the reaction has further proceeded, the solution becomes a suspension in which the fine polysiloxane network structure material is dispersed.

The preparation step further includes formulating a second mixture solution which is a mixture of a tetraalkoxysilane, a hydrocarbon group-containing trialkoxysilane, an acid catalyst, water, and an organic solvent. The second mixture solution is used in a "second application step" described below. The amounts of the tetraalkoxysilane, hydrocarbon group-containing trialkoxysilane, acid catalyst, water, and organic solvent in the mixture are preferably adjusted so that the amount of the acid catalyst is 0.005-0.1 mol, the amount of the water is 0.5-10 mol, and the amount of the organic solvent is 5-60 mol with respect to a total of 1 mole of the tetraalkoxysilane and hydrocarbon group-containing trialkoxysilane. If the amount of the acid catalyst in the mixture is less than 0.005 mol, the hydrolysis rate is low, and therefore, it takes a long time to produce the separation membrane. If the amount of the acid catalyst in the mixture is more than 0.1 mol, the hydrolysis rate is excessively high, and therefore, it is difficult to obtain the separation membrane which uniform. If the amount of the water in the mixture is less than 0.5 mol, the rate of hydrolysis is low, and therefore, a sol-gel reaction described below does not proceed sufficiently. If the amount of the water in the mixture is more than 10 mol, the rate of hydrolysis is excessively high, and therefore, the pore size increases, which makes it difficult to obtain the separation membrane which is dense. If the amount of the organic solvent in the mixture is less than 5 mol, the concentration of the second mixture solution is high, and therefore, it is difficult to obtain the separation membrane which is dense and uniform. If the amount of the organic solvent in the mixture is more than 60 mol, the concentration of the second mixture solution is low, the number of times of coating with the mixture solution (the number of steps) increases, resulting in a reduction in production efficiency. The acid catalyst and the organic solvent may be similar to those of the first mixture solution. When the second mixture solution is formulated, a metal salt having affinity for carbon dioxide may be added. The amount of the metal salt added to the mixture is adjusted to 0.01-0.3 mol under the above mixture conditions. As the metal salt having affinity for carbon dioxide, those described above in the section "Acidic Gas-Containing Gas Treatment Separation Membrane" may be used.

In the second mixture solution, initially, a sol-gel reaction proceeds in which the tetraalkoxysilane repeatedly undergoes hydrolysis and polycondensation as in scheme 1, so that silanol group-containing or ethoxy group-containing siloxane oligomers are dissolved in the second mixture solution containing the organic solvent. Next, a reaction of the siloxane oligomer and the hydrocarbon group-containing trialkoxysilane begins to occur. The hydrocarbon group-containing trialkoxysilane may be any of those described in the above section "Acidic Gas-Containing Gas Treatment Separation Membrane." For example, when methyltrimethoxysilane is used as an example of the hydrocarbon group-containing trialkoxysilane, the reaction may proceed according to scheme 2 below. Note that scheme 2 is a model representing the process of the reaction, and may not necessarily exactly correspond to the actual molecular structure.

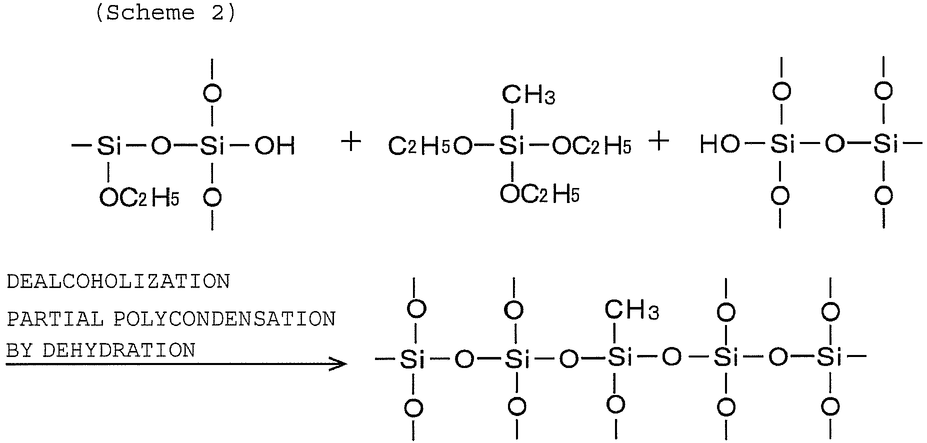

According to scheme 2, a silanol group or ethoxy group of the siloxane oligomer and an ethoxy group of methyltriethoxysilane react with each other to undergo dealcoholization, resulting in a polysiloxane. Here, the silanol groups or ethoxy groups of the siloxane oligomers are substantially uniformly distributed in the siloxane backbone as described above. Therefore, the reaction (dealcoholization) of a silanol group or ethoxy group of the siloxane oligomer and an ethoxy group of methyltriethoxysilane may substantially uniformly proceed. As a result, a siloxane linkage derived from methyltrimethoxysilane is substantially uniformly produced in the produced polysiloxane, and therefore, an ethyl group derived from methyltrimethoxysilane is also substantially uniformly present in the polysiloxane. When a metal salt is added, the metal salt incorporated in the polysiloxane during the sol-gel reaction may be substantially uniformly distributed in the polysiloxane. After the reaction has further proceeded, the solution becomes a suspension in which the fine hydrocarbon group-containing polysiloxane network structure material is dispersed.

For the formulation of the second mixture solution, the acid catalyst may be preferably added in divided portions, the hydrocarbon group-containing trialkoxysilane, which is easily hydrolyzed, may be preferably mixed at the end, or the like. For example, the composition of the mixture solution is formulated so that the pH of the mixture solution is invariably within the range of 0.8-2.5. In this case, the pH of the second mixture solution does not vary significantly, and therefore, the hydrolysis of the hydrocarbon group-containing trialkoxysilane does not proceed rapidly, so that the sol-gel reaction is allowed to proceed in a stable manner.

### (b) First Application Step

A first application step includes applying the first mixture solution (a suspension of the fine polysiloxane network structure material) obtained in the preparation step to an inorganic porous support member. Examples of a technique of applying the first mixture solution to the inorganic porous support member include dipping, spraying, spinning, and the like. Of them, dipping is preferable because the mixture solution can be uniformly and easily applied to the surface of the inorganic porous support member. A specific procedure for dipping will be described.

Initially, the inorganic porous support member is immersed in the first mixture solution. The immersion time is preferably 5 sec to 10 min in order to allow the first mixture solution to sufficiently adhere to the inorganic porous support member. If the immersion time is shorter than 5 sec, a sufficient thickness is not obtained. If the immersion time exceeds 10 min, an excessively large thickness is obtained. Next, the inorganic porous support member is pulled out of the first mixture solution. A speed at which the inorganic porous support member is pulled out (referred to as a "pulling speed") is preferably set to 0.1-2 mm/sec. If the pulling speed is slower than 0.1 mm/sec, an excessively large thickness is obtained. If the pulling speed is faster than 2 mm/sec, a sufficient thickness is not obtained. Next, the inorganic porous support member pulled out is dried. The drying is preferably performed under conditions that 15-40°C and 0.5-3 h. If the drying time is less than 0.5 h, the inorganic porous support member is not sufficiently dried. If the drying time exceeds 3 h, the dried state remains almost unchanged after three hours of the drying. After the end of the drying, the inorganic porous support member with the fine polysiloxane network structure material adhering to the surface (including inner surfaces of a portion of the pores) is obtained. Note that by performing the above series of steps, i.e., the immersion, pulling-out, and drying steps, on the inorganic porous support member a plurality of times, the amount of the fine polysiloxane network structure material adhering to the inorganic porous support member can be increased. Also, by repeatedly performing the series of steps, the first mixture solution can be uniformly applied to the inorganic porous support member, and therefore, the acidic gas-containing gas treatment separation membrane finally obtained can be further stabilized.

### (c) Intermediate Layer Formation Step

An intermediate layer formation step includes thermally treating the inorganic porous support member after the end of the first application step, to fix or fuse the fine polysiloxane network structure material to the surface of the inorganic porous support member, thereby forming an intermediate layer including the polysiloxane network structure material. For the thermal treatment, for example, a heating means, such as a baking device or the like, is used. A specific procedure for the thermal treatment will be described.

Initially, the temperature of the inorganic porous support member is increased until it reaches a thermal treatment temperature described below. The temperature increasing time is preferably 1-24 h. If the temperature increasing time is shorter than 1 h, it is difficult to obtain a uniform membrane due to the rapid change in temperature. If the temperature increasing time is longer than 24 h, the membrane is likely to deteriorate due to the long-time heating. After the increase of the temperature, a thermal treatment (baking) is performed for a predetermined period of time. The thermal treatment temperature is preferably 30-300°C, more preferably 50-200°C. If the thermal treatment temperature is lower than 30°C, the thermal treatment is not sufficient, so that a dense membrane is not obtained. If the thermal treatment temperature is higher than 300°C, the high-temperature heating is likely to deteriorate the membrane. The thermal treatment time is preferably 0.5-6 h. If the thermal treatment time is shorter than 0.5 h, the thermal treatment is not sufficient, so that a dense membrane is not obtained. If the thermal treatment time is longer than 6 h, the long-time heating is likely to deteriorate the membrane. After the end of the thermal treatment, the inorganic porous support member is cooled to room temperature. The cooling time is preferably 5-10 h. If the cooling time is shorter than 5 h, the rapid change in temperature is likely to cause the membrane to crack or come off. If the cooling time is longer than 10 h, the membrane is likely to deteriorate. The inorganic porous support member after the cooling has an intermediate layer formed on the surface thereof (including inner surfaces of a portion of the pores). The weight per unit area of the intermediate layer is adjusted to 0.1-5.0 mg/cm², preferably 0.5-3.0 mg/cm². Note that, after the "intermediate layer formation step," the process may return to the above "first application step." If the set of the first application step and the intermediate layer formation step is performed a plurality of times, a denser intermediate layer having more uniform membrane quality can be formed on the surface of the inorganic porous support member.

### (d) Second Application Step

A second application step includes applying the second mixture solution (a suspension of the fine hydrocarbon group-containing polysiloxane network structure material) to the inorganic porous support member having the intermediate layer formed by the intermediate layer formation step. In the second application step, the second mixture solution is applied to the inorganic porous support member with the intermediate layer being interposed therebetween. Therefore, the amount of the second mixture solution that permeates the inorganic porous support member (a distance in the depth direction from the surface of the inorganic porous support member, by which the tetraalkoxysilane or the hydrocarbon group-containing trialkoxysilane permeates the inorganic porous support member) can be limited to 50 µm or less. Therefore, the pores of the inorganic porous support member are not excessively blocked. As a result, when a gas mixture is applied to the acidic gas-containing gas treatment separation membrane finally obtained by a separation layer formation step described below, the rate of passing gas (the rate of treating the gas mixture) can be maintained. In addition, the amounts of the materials (sol) for formation of the intermediate layer and the separation layer which are applied to the inorganic porous support member can be reduced, which can contribute to a reduction in the manufacturing cost of the acidic gas-containing gas treatment separation membrane. The second mixture solution is applied using a technique and conditions similar to those for the first application step. Also in the second application step, by performing the above series of steps, i.e., the step of immersion in the second mixture solution, the pulling-out step, and the drying step, on the inorganic porous support member a plurality of times, the amount of the fine hydrocarbon group-containing polysiloxane network structure material adhering to the inorganic porous support member can be increased. Also, by repeatedly performing the series of steps, the second mixture solution can be uniformly applied to the inorganic porous support member, and therefore, the separation performance of the acidic gas-containing gas treatment separation membrane finally obtained can be further improved.

### (e) Separation Layer Formation Step

A separation layer formation step includes thermally treating the inorganic porous support member after the end of the second application step, to fix or fuse the fine hydrocarbon group-containing polysiloxane network structure material to the surface of the inorganic porous support member, thereby forming a separation layer including the hydrocarbon group-containing polysiloxane network structure material. The thermal treatment is performed using a technique and conditions similar to those for the intermediate layer formation step. By the separation layer formation step, the separation layer is formed on the intermediate layer. The weight per unit area of the separation layer is adjusted to 0.1-3.0 mg/cm², preferably 0.5-2.0 mg/cm². Note that, after the "separation layer formation step," the process may return to the "second application step." If the set of the second application step and the separation layer formation step is performed a plurality of times, a denser separation layer having more uniform membrane quality can be formed on the surface of the inorganic porous support member.

By performing the above steps (a)-(e), the acidic gas-containing gas treatment separation membrane of the present invention is produced. The separation membrane has a separation layer which has a site (methyl group) for attracting a specific gas (carbon dioxide in this embodiment) on the inorganic porous support member as a base. The separation layer may be formed on the surface of the inorganic porous support member with an intermediate layer being interposed therebetween. Here, the polysiloxane network structure material contained in the intermediate layer, and the hydrocarbon group-containing polysiloxane network structure material contained in the separation layer, belong to the same material category and have similar molecular structures. Therefore, the polysiloxane network structure material and the hydrocarbon group-containing polysiloxane network structure material have high affinity for each other. Therefore, interface debonding, cracking, or the like does not occur between the intermediate layer and the separation layer, and the intermediate layer and the separation layer are firmly attached together, so that a stable acidic gas-containing gas treatment separation membrane can be formed. When a gas mixture containing carbon dioxide and methane gas is applied to the acidic gas-containing gas treatment separation membrane, carbon dioxide in the gas mixture is selectively attracted by the surface of the hydrocarbon group-containing polysiloxane network structure material, so that carbon dioxide directly passes through the separation membrane. Therefore, the methane gas component of the gas mixture is concentrated, and therefore, a gas having a high methane concentration can be efficiently obtained. The concentrated methane gas can be used as a material for town gas or a source for hydrogen used for a fuel cell. Note that if the separation layer has a site for attracting methane gas (a hydrocarbon group having carbon atoms the number of which is larger than or equal to that of an ethyl group), then when a gas mixture containing carbon dioxide and methane gas is applied, methane gas is selectively attracted by the gas attraction layer, and then directly passed through the pores. Therefore, in this case, methane gas passing through the separation membrane can be recovered, and then used as a material for town gas or a source for hydrogen used for a fuel cell.

### Examples

Examples of the acidic gas-containing gas treatment separation membrane of the present invention will now be described.

### <Production of Separation Membrane>

As the separation membrane, a carbon dioxide separation membrane was produced according to the "Method for Producing Acidic Gas-Containing Gas Treatment Separation Membrane" described in the above embodiment. In all examples and comparative examples, tetraethoxysilane (Shin-Etsu Silicone LS-2430, manufactured by Shin-Etsu Chemical Co., Ltd.) was used as a tetraalkoxysilane, methyltriethoxysilane (Shin-Etsu Silicone LS-1890, manufactured by Shin-Etsu Chemical Co., Ltd.) was used as a hydrocarbon group-containing trialkoxysilane, nitric acid (manufactured by Wako Pure Chemical Industries, Ltd., super special grade reagent 69.5%) was used as an acid catalyst, and ethanol (manufactured by Wako Pure Chemical Industries, Ltd., super special grade reagent 99.5%) was used as an organic solvent. The amounts of materials used in Examples 1-6 and Comparative Example 1 are shown in Table 1. Note that "mol" in Table 1 represents the ratio of the mol concentration of each material to the mol concentration of tetraethoxysilane, where the mol concentration of tetraethoxysilane is one, in an intermediate layer formation alkoxide solution, and the ratio of the mol concentration of each material to the total mol concentration of tetraethoxysilane and methyltriethoxysilane, where the total mol concentration of tetraethoxysilane and methyltriethoxysilane is one, in an separation layer formation alkoxide solution.

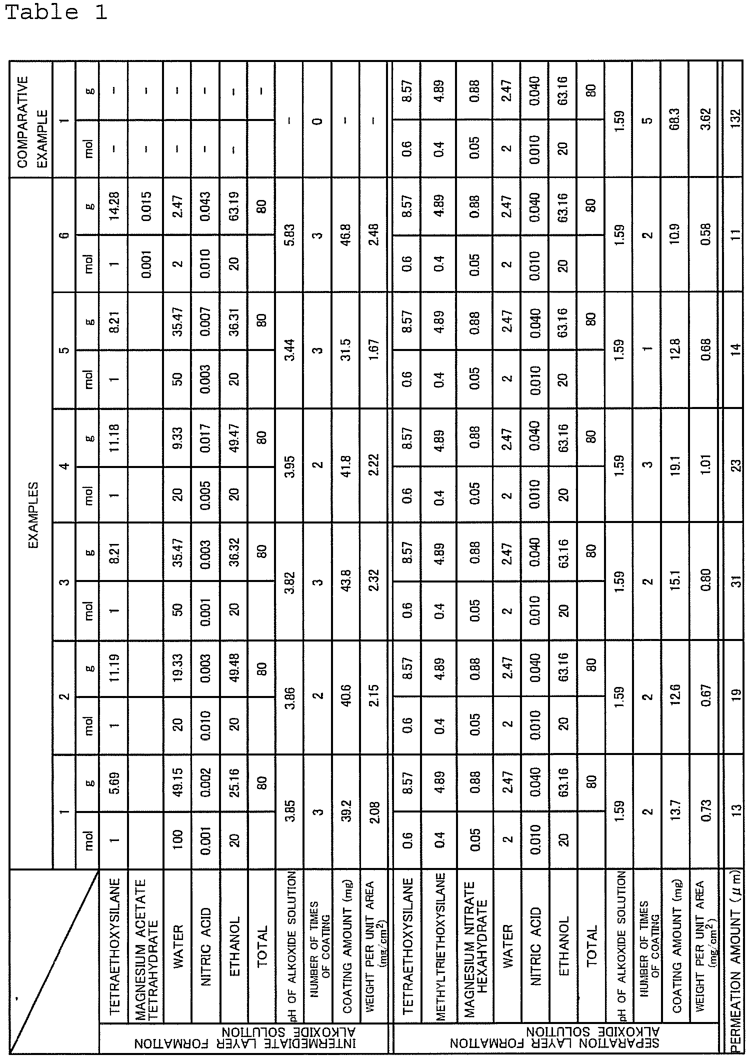

### (Example 1)

Prior to production of the separation membrane, an alkoxide solution for forming the intermediate layer (first mixture solution) and an alkoxide solution for forming the separation layer (second mixture solution) were prepared. According to materials and their amounts shown in Table 1, a mixture solution of water, nitric acid, and ethanol was stirred for 30 min, then tetraethoxysilane was added to the mixture solution, followed by stirring for 2 h, to formulate the alkoxide solution for forming the intermediate layer (also referred to as the intermediate layer formation alkoxide solution). The intermediate layer formation alkoxide solution had a pH of 3.85. Also, according to materials and their amounts shown in Table 1, a mixture solution of water, nitric acid, and ethanol was stirred for 30 min, then tetraethoxysilane was added to the mixture solution, followed by stirring for 1 h, then methyltrimethoxysilane was added to the mixture solution, followed by stirring for 2.5 h, and then magnesium nitrate hexahydrate was added to the mixture solution, followed by stirring for 2 h, to formulate the alkoxide solution for forming the separation layer (also referred to as the separation layer formation alkoxide solution) (second mixture solution). The separation layer formation alkoxide solution had a pH of 1.59.

The intermediate layer formation alkoxide solution and separation layer formation alkoxide solution thus formulated were applied to an inorganic porous support member to produce a carbon dioxide separation membrane including an intermediate layer and a separation layer. As the inorganic porous support member, a tubular object of an alumina ceramic was used. Initially, the intermediate layer formation alkoxide solution was applied to the surface of the tubular object by dipping. In the dipping step, the pulling speed was 5 mm/s, and after the pulling out, drying was performed at room temperature for 1 h. The application and drying of the intermediate layer formation alkoxide solution were performed two times, followed by a thermal treatment in a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The above process (coating) was performed three times to form an intermediate layer on the surface of the tubular object. The intermediate layer had a coating amount of 39.2 mg and a weight per unit area of 2.08 mg/cm². Next, the separation layer formation alkoxide solution was applied to the surface of the tubular object having the intermediate layer by dipping. In the dipping step, the pulling speed was 5 mm/s, and after the pulling out, drying was performed at room temperature for 1 h. The application and drying of the separation layer formation alkoxide solution were performed two times, followed by a thermal treatment using a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The above process (coating) was performed two times to form a separation layer on the intermediate layer. The separation layer had a coating amount of 13.7 mg and a weight per unit area of 0.73 mg/cm². Thus, the completion of the separation membrane of Example 1 was completed. Si component analysis was performed on the separation membrane of Example 1 using SEM-EDS, which showed that the amount of the alkoxide solution that permeates the tubular object (a distance in the depth direction from the surface of the inorganic porous support member, by which a tetraalkoxysilane or a hydrocarbon group-containing trialkoxysilane permeates the inorganic porous support member) was 13 µm.

### (Example 2)

An intermediate layer formation alkoxide solution (first mixture solution) and a separation layer formation alkoxide solution (second mixture solution) were prepared, and were applied to a tubular object of an alumina ceramic which is an inorganic porous support member, followed by a thermal treatment, to produce a carbon dioxide separation membrane of Example 2 including an intermediate layer and an separation layer.

According to materials and their amounts shown in Table 1, an intermediate layer formation alkoxide solution and a separation layer formation alkoxide solution that were used in Example 2 were formulated using procedures similar to those of Example 1. The intermediate layer formation alkoxide solution had a pH of 3.86, and the separation layer formation alkoxide solution had a pH of 1.59. The step of coating for the intermediate layer was performed two times, and the step of coating for the separation layer was performed two times, using production procedures and production conditions similar to those of Example 1, to produce the separation membrane of Example 2. In the separation membrane of Example 2, the intermediate layer had a coating amount of 40.6 mg and a weight per unit area of 2.15 mg/cm², and the separation layer had a coating amount of 12.6 mg and a weight per unit area of 0.67 mg/cm². Also, the amount of the alkoxide solution that permeates the tubular object was 19 µm.

### (Example 3)

An intermediate layer formation alkoxide solution (first mixture solution) and a separation layer formation alkoxide solution (second mixture solution) were prepared, and were applied to a tubular object of an alumina ceramic which is an inorganic porous support member, followed by a thermal treatment, to produce a carbon dioxide separation membrane of Example 3 including an intermediate layer and an separation layer.

According to materials and their amounts shown in Table 1, an intermediate layer formation alkoxide solution and a separation layer formation alkoxide solution that were used in Example 3 were formulated using procedures similar to those of Example 1. The intermediate layer formation alkoxide solution had a pH of 3.82, and the separation layer formation alkoxide solution had a pH of 1.59. The step of coating for the intermediate layer was performed three times, and the step of coating for the separation layer was performed two times, using production procedures and production conditions similar to those of Example 1, to produce the separation membrane of Example 3. In the separation membrane of Example 3, the intermediate layer had a coating amount of 43.8 mg and a weight per unit area of 2.32 mg/cm², and the separation layer had a coating amount of 15.1 mg and a weight per unit area of 0.80 mg/cm². Also, the amount of the alkoxide solution that permeates the tubular object was 31 µm.

### (Example 4)

An intermediate layer formation alkoxide solution (first mixture solution) and a separation layer formation alkoxide solution (second mixture solution) were prepared, and were applied to a tubular object of an alumina ceramic which is an inorganic porous support member, followed by a thermal treatment, to produce a carbon dioxide separation membrane of Example 4 including an intermediate layer and an separation layer.

According to materials and their amounts shown in Table 1, an intermediate layer formation alkoxide solution and a separation layer formation alkoxide solution that were used in Example 4 were formulated using procedures similar to those of Example 1. The intermediate layer formation alkoxide solution had a pH of 3.95, and the separation layer formation alkoxide solution had a pH of 1.59. The step of coating for the intermediate layer was performed two times, and the step of coating for the separation layer was performed three times, using production procedures and production conditions similar to those of Example 1, to produce the separation membrane of Example 4. In the separation membrane of Example 4, the intermediate layer had a coating amount of 41.8 mg and a weight per unit area of 2.22 mg/cm², and the separation layer had a coating amount of 19.1 mg and a weight per unit area of 1.01 mg/cm². Also, the amount of the alkoxide solution that permeates the tubular object was 23 µm.

### (Example 5)

An intermediate layer formation alkoxide solution (first mixture solution) and a separation layer formation alkoxide solution (second mixture solution) were prepared, and were applied to a tubular object of an alumina ceramic which is an inorganic porous support member, followed by a thermal treatment, to produce a carbon dioxide separation membrane of Example 5 including an intermediate layer and an separation layer.

According to materials and their amounts shown in Table 1, an intermediate layer formation alkoxide solution and a separation layer formation alkoxide solution that were used in Example 5 were formulated using procedures similar to those of Example 1. The intermediate layer formation alkoxide solution had a pH of 3.44, and the separation layer formation alkoxide solution had a pH of 1.59. The step of coating for the intermediate layer was performed three times, and the step of coating for the separation layer was performed once, using production procedures and production conditions similar to those of Example 1, to produce the separation membrane of Example 5. In the separation membrane of Example 5, the intermediate layer had a coating amount of 31.5 mg and a weight per unit area of 1.67 mg/cm², and the separation layer had a coating amount of 12.8 mg and a weight per unit area of 0.68 mg/cm². Also, the amount of the alkoxide solution that permeates the tubular object was 14 µm.

### (Example 6)

An intermediate layer formation alkoxide solution (first mixture solution) and a separation layer formation alkoxide solution (second mixture solution) were prepared, and were applied to a tubular object of an alumina ceramic which is an inorganic porous support member, followed by a thermal treatment, to produce a carbon dioxide separation membrane of Example 6 including an intermediate layer and an separation layer.

According to materials and their amounts shown in Table 1, a mixture solution of water, nitric acid, and ethanol was stirred for 30 min, then tetraethoxysilane was added to the mixture solution, followed by stirring for 2 h, then magnesium acetate tetrahydrate was added to the mixture solution, followed by stirring for 2 h, to formulate the intermediate layer formation alkoxide solution (first mixture solution). The intermediate layer formation alkoxide solution had a pH of 5.83. Also, according to materials and their amounts shown in Table 1, a mixture solution of water, nitric acid, and ethanol was stirred for 30 min, then tetraethoxysilane was added to the mixture solution, followed by stirring for 1 h, then methyltrimethoxysilane was added to the mixture solution, followed by stirring for 2.5 h, and then magnesium nitrate hexahydrate was added to the mixture solution, followed by stirring for 2 h, to formulate the separation layer formation alkoxide solution (second mixture solution). The separation layer formation alkoxide solution had a pH of 1.59. The step of coating for the intermediate layer was performed three times, and the step of coating for the separation layer was performed two times, using production procedures and production conditions similar to those of Example 1, to produce the separation membrane of Example 6. In the separation membrane of Example 6, the intermediate layer had a coating amount of 46.8 mg and a weight per unit area of 2.48 mg/cm², and the separation layer had a coating amount of 10.9 mg and a weight per unit area of 0.58 mg/cm². Also, the amount of the alkoxide solution that permeates the tubular object was 11 µm.

### (Comparative Example 1)

A separation layer formation alkoxide solution was prepared, and was applied to a tubular object of an alumina ceramic which is an inorganic porous support member, followed by a thermal treatment, to produce a carbon dioxide separation membrane according to Comparative Example 1. The separation membrane of Comparative Example 1 does not have an intermediate layer.

According to materials and their amounts shown in Table 1, a mixture solution of water, nitric acid, and ethanol was stirred for 30 min, then tetraethoxysilane was added to the mixture solution, followed by stirring for 1 h, then methyltrimethoxysilane was added to the mixture solution, followed by stirring for 2.5 h, and then magnesium nitrate hexahydrate was added to the mixture solution, followed by stirring for 2 h, to formulate the separation layer formation alkoxide solution. The separation layer formation alkoxide solution had a pH of 1.59.

The separation layer formation alkoxide solution was applied to the surface of the tubular object by dipping. In the dipping step, the pulling speed was 5 mm/s, and after the pulling out, drying was performed at room temperature for 1 h. The application and drying of the separation layer formation alkoxide solution were performed two times, followed by a thermal treatment using a baking device. The thermal treatment was performed under the following conditions: the temperature was increased from room temperature (25°C) to 150°C in 5 h; the temperature was maintained at 150°C for 2 h; and the temperature was decreased to 25°C in 5 h. The above process (coating) was performed five times to form a separation layer on the surface of the tubular object. Thus, the production of the separation membrane of Comparative Example 1 was completed. In the separation membrane of Comparative Example 1, the separation layer had a coating amount of 68.3 mg and a weight per unit area of 3.62 mg/cm². Also, the amount of the alkoxide solution that permeates the tubular object was 132 µm, which is greater than those in Examples 1-6.

### <Separation Performance Verification Test>

A test for verifying the carbon dioxide separation performance of the separation membranes of Examples 1-6 and Comparative Example 1 was conducted. In the verification test, a gas permeation rate [P(CO₂)] at which carbon dioxide passes through a separation membrane, and a gas permeation rate [P(N₂)] at which nitrogen passes through the same separation membrane, were measured. Here, nitrogen has a gas molecular size of 3.64 Å, and carbon dioxide has a gas molecular size of 3.3 Å. Therefore, carbon dioxide, which has a smaller gas molecular size than that of nitrogen, more easily passes through a separation membrane. Therefore, if a configuration of a membrane is suitably set by utilizing such different properties of these gases, carbon dioxide can be separated from a gas mixture containing carbon dioxide. Note that, in the verification test, a gas permeation rate [P(CH₄)] at which methane gas passes through a separation membrane was not measured. The gas molecular size (3.8 Å) of methane gas is slightly greater than that (3.64 Å) of nitrogen. Therefore, if it can be verified that carbon dioxide and nitrogen can be separated from each other using the separation membrane of the present invention, it is inferred that carbon dioxide and methane gas can be separated from each other.

FIG. 1 is a schematic diagram showing a configuration of a gas permeation rate measurement device 10 which was used in the separation performance verification test. The gas permeation rate measurement device 10 includes a gas cylinder 1, a pressure gauge 2, a chamber 3, and a mass flowmeter 4. A separation membrane 5 was placed in the chamber 3. The separation membrane 5 to be tested is a tubular object including an intermediate layer and separation layer formed on a surface thereof (Examples 1-6), or a tubular object including only a separation layer on a surface thereof (Comparative Example 1).

The gas cylinder 1 was previously loaded with carbon dioxide gas or nitrogen gas to be measured. Here, it is assumed that the gas cylinder 1 was loaded with carbon dioxide. The pressure of carbon dioxide emitted from the gas cylinder 1 is adjusted by the pressure gauge 2 before being supplied to the downstream chamber 3. In the verification test, the pressure at which carbon dioxide was supplied was adjusted to 0.1 MPa at room temperature. The separation membrane 5, which is a tubular object, has one end (front end) 5a which is sealed, and the other end (base end) 5b which is connected to a heat-resistant glass pipe 6. The heat-resistant glass pipe 6 was a Pyrex (registered trademark) pipe manufactured by Corning Inc. (outer diameter: 8mm, inner diameter: 6mm, and length: 10 mm). Note that one end of the heat-resistant glass pipe 6 was processed to have an outer diameter of 7 mm or less so that the end can be inserted into the separation membrane 5 (inner diameter: 7 mm). The separation membrane 5 and the heat-resistant glass pipe 6 were bonded together using an adhesive ("Cemedine (registered trademark) C" manufactured by Cemedine Co., Ltd.) at a connection portion thereof, which was further sealed using an epoxy resin (two-part liquid epoxy adhesives "AV138" and "HV998," manufactured by Nagase ChemteX Corporation). When the chamber 3 was filled with carbon dioxide, carbon dioxide passed through the surface of the separation membrane 5, which is a tubular object, into the pipe, and then flowed into the mass flowmeter 4 through the heat-resistant glass pipe 6. The mass flowmeter 4 was a thermal mass flowmeter manufactured by Kofloc (mass flowmeter "5410"). Measurement was performed under the following conditions: the flow rate range was 10 mL/min; and the accuracy with respect to the full-scale (FS) maximum flow rate was ±1% (20°C). The gas permeation rate [P(CO₂)] (m³/(m² × s (sec) × Pa)) of carbon dioxide was calculated from the flow rate [mL/min] of carbon dioxide measured by the mass flowmeter 4. The gas permeation rate [P(N₂)] (m³/(m² × s (sec) × Pa)) of nitrogen was calculated in a manner similar to that described above. The carbon dioxide separation performance was evaluated from a permeation rate ratio [α(CO₂/N₂)] which is the ratio of the carbon dioxide gas permeation rate [P(CO₂)] and the nitrogen gas permeation rate [P(N₂)]. The result of the separation performance verification test is shown in Table 2.

**Table 2**

| | | EXAMPLES | | | | | | COMPARATIVE EXAMPLE |
|---|---|---|---|---|---|---|---|---|
| | | 1 | 2 | 3 | 4 | 5 | 6 | 1 |
| GAS PERMEATION RATE (m³/(m² × s(sec) × Pa)) | P(N2) | -12. 9.38×10⁻¹² | -11 1.40x10 | 7.11×10⁻¹² | 1.09×10⁻¹² | 6.62×10⁻¹² | 3.33 × 10⁻¹¹ | 4.50×10⁻¹¹ |
| | P(CO2) | -10 7.29×10⁻¹⁰ | 7.79×10⁻¹⁰ | 6.15×10⁻¹⁰ | 1.05×10⁻¹⁰ | 6.28×10⁻¹⁰ | 9.11×10⁻¹⁰ | 4.30×10⁻¹⁰ |
| PERMEATION RATE RATIO | α(CO₂/N₂) | 74.1 | 55.6 | 86.4 | 96.1 | 94.9 | 27.3 | 9.6 |

As shown in Table 2, the separation membranes of Examples 1-6 including an intermediate layer and a separation layer have good carbon dioxide permeability with respect to nitrogen. In contrast to this, the separation membrane of Comparative Example 1 which includes a separation layer and does not include an intermediate layer does not have sufficient carbon dioxide permeability with respect to nitrogen. Comparison between the examples and the comparative example demonstrated that the permeation rate ratio of carbon dioxide and nitrogen of the former is about 3-10 times higher than that of the latter.

Thus, it was suggested that the acidic gas-containing gas treatment separation membrane of the present invention has good performance of separation of at least carbon dioxide, and therefore, can separate carbon dioxide from, for example, methane hydrate occurring on the ocean floor, biogas occurring during biological processing of garbage or the like, off-gas which is a byproduct of oil refinery, and the like, and thereby concentrate methane gas to a useful concentration.

### INDUSTRIAL APPLICABILITY

The acidic gas-containing gas treatment separation membrane of the present invention and the production method therefor are useful in equipment for producing town gas, equipment for supplying hydrogen to a fuel cell, equipment for cleaning gas emitted from a factory, equipment for producing liquefied carbon dioxide, and the like.

### REFERENCE SIGNS LIST

- 1: GAS CYLINDER
- 2: PRESSURE GAUGE
- 3: CHAMBER
- 4: MASS FLOWMETER
- 5: SEPARATION MEMBRANE
- 6: HEAT-RESISTANT GLASS PIPE
- 10: GAS PERMEATION RATE MEASUREMENT DEVICE

## Claims

1. An acidic gas-containing gas treatment separation membrane (5) **characterized by** comprising:
an inorganic porous support member;
an intermediate layer containing a polysiloxane network structure material and formed on a surface of the inorganic porous support member; and
a separation layer containing a hydrocarbon group-containing polysiloxane network structure material and formed on the intermediate layer.

2. The acidic gas-containing gas treatment separation membrane (5) of claim 1, **characterized in that**
the polysiloxane network structure material is a single structure material obtained by a sol-gel reaction of a tetraalkoxysilane, and
the hydrocarbon group-containing polysiloxane network structure material is a composite structure material obtained by a sol-gel reaction of a tetraalkoxysilane and a hydrocarbon group-containing trialkoxysilane.

3. The acidic gas-containing gas treatment separation membrane (5) of claim 2, **characterized in that**
the tetraalkoxysilane is tetramethoxysilane or tetraethoxysilane, and
the hydrocarbon group-containing trialkoxysilane is a trimethoxysilane or a triethoxysilane, the Si atom of the trimethoxysilane or triethoxysilane being bonded to an alkyl group having 1-6 carbon atoms or a phenyl group.

4. The acidic gas-containing gas treatment separation membrane (5) of any one of claims 1-3, **characterized in that**
at least one of the intermediate layer and the separation layer is doped with a metal salt having affinity for acidic gas.

5. The acidic gas-containing gas treatment separation membrane (5) of claim 4, **characterized in that**
the metal salt is an acetate, nitrate, carbonate, borate, or phosphate of at least one metal selected from the group consisting of Li, Na, K, Cs, Mg, Ca, Ni, Fe, and Al

6. The acidic gas-containing gas treatment separation membrane (5) of any one of claims 1-5, **characterized in that**
the intermediate layer has a weight per unit area of 0.1-5.0 mg/cm², and
the separation layer has a weight per unit area of 0.1-3.0 mg/cm².

7. The acidic gas-containing gas treatment separation membrane (5) of any one of claims 1-6, **characterized in that**
the inorganic porous support member has pores of 4-200 nm.

8. The acidic gas-containing gas treatment separation membrane (5) of any one of claims 2-7, **characterized in that**
a distance in a depth direction from a surface of the inorganic porous support member, by which the tetraalkoxysilane or the hydrocarbon group-containing trialkoxysilane permeates the inorganic porous support member, is 50 µm or less.

9. A method for manufacturing an acidic gas-containing gas treatment separation membrane (5), **characterized by** comprising:
(a) a preparation step of formulating a first mixture solution of a tetraalkoxysilane, an acid catalyst, water, and an organic solvent, and a second mixture solution of a tetraalkoxysilane, a hydrocarbon group-containing trialkoxysilane, an acid catalyst, water, and an organic solvent;
(b) a first application step of applying the first mixture solution to a surface of an inorganic porous support member;
(c) an intermediate layer formation step of performing a thermal treatment on the inorganic porous support member after the first application step, to form an intermediate layer containing a polysiloxane network structure material on the surface of the inorganic porous support member;
(d) a second application step of applying the second mixture solution onto the intermediate layer; and
(e) a separation layer formation step of performing a thermal treatment on the inorganic porous support member after the second application step, to form a separation layer containing a hydrocarbon group-containing polysiloxane network structure material on the intermediate layer.

10. The method of claim 9, **characterized in that**
a set of the first application step and the intermediate layer formation step is performed a plurality of times.

11. The method of claim 9 or 10, **characterized in that**
a set of the second application step and the separation layer formation step is performed a plurality of times.
